# EUROPÄISCHE PATENTANMELDUNG

(11) **EP 0 647 554 A2**
(43) Veröffentlichungstag der Anmeldung: **12.04.1995**
(21) Anmeldenummer: 94116022.8
(22) Anmeldetag: 11.10.1994
(51) Int. Cl.: B62D 13/02, B62D 7/14, B60G 11/28, B60G 9/00

(54) **Deaktivierbare Achslenkung**

(30) Priorität: 12.10.1993 DE 4334742
(71) Anmelder: Francke, Renate, D-22391 Hamburg (DE)
(72) Erfinder: Sülzer, Heinz, Dipl.-Ing., D-86438 Kissing (DE)
(74) Vertreter: Alber, Norbert

(57) **Zusammenfassung**

Die Erfindung betrifft eine Achslenkung, wie sie insbesondere an Lastkraftwagen, Omnibussen, Sattelaufliegern oder knickgelenkten Arbeitsmaschinen an Hinterachsen (1) sinnvoll ist, um das Rangieren der Lkw durch Verringerung des Wendekreises zu erleichtern, den Reifenverschleiß durch Radieren der Reifen (2) beim Rangieren zu verringern und auch um bei schneller Fahrt ein Gegenlenken zum Stabilisieren zu ermöglichen. Es ist daher die Aufgabe der vorliegenden Erfindung, eine Hinterachslenkung zu schaffen, die möglichst einfach und wartungsarm arbeitet und unabhängig von den speziellen Abmessungen des Lkw nur wenige individuell anzupassende Teile erfordert. Auch das Nachrüsten eines nicht hinterachsgelenkten Lkw soll mit möglichst geringem Aufwand möglich sein. Um diese Aufgabe zu schaffen wird an der auszulenkenden Achse (1) ein Stellglied (31), welches über ein Steuerglied verstellbar ist, benötigt.

## Beschreibung

Die Erfindung betrifft eine Achslenkung, wie sie insbesondere an Lastkraftwagen, Omnibussen und Sattelaufliegern oder knickgelenkten Arbeitsmaschinen an Hinterachsen sinnvoll ist, um das Rangieren der Lkw durch Verringerung des Wendekreises zu erleichtern, den Reifenverschleiß durch Radieren der Reifen beim Rangieren zu verringern und auch um bei schneller Fahrt ein Gegenlenken zum Stabilisieren zu ermöglichen.

Ziel derartiger Hinterachslenkungen ist es, die Hinterachse in Abhängigkeit vom Lenkeinschlag der Vorderachse auszulenken, wenn eine Lenkung der Hinterachse notwendig ist, also beispielsweise beim langsamen Rangieren. Dagegen sollen derartige Hinterachsen in einer nicht lenkende Stellung fixiert werden können, falls der Lkw mit schneller Fahrt auf öffentlichen Straßen unproblematisch bewegt wird, da in diesem Fall das Fahrverhalten eher dem Fahrverhalten konventioneller, nicht hinterachsgelenkter Lkw entspricht und dadurch für nicht spezialisierte Fahrer besser beherrschbar ist.

Es ist bekannt, Hinterachslenkungen mittels eines mechanischen Hebelgestänges von der gelenkten Vorderachse aus anzusteuern. Der Nachteil derartiger Lösungen besteht darin, daß einerseits diese mechanische Ansteuerung mit der Zeit dem Verschleiß unterliegt und dann aufwendige Wartungsarbeiten notwendig sind, und zum anderen das Festsetzen der Hinterachse in einer ungelenkten Mittelstellung einen hohen mechanischen Aufwand erfordert und nicht vollständig funktionssicher ist.

Es ist daher die Aufgabe der vorliegenden Erfindung, eine Hinterachslenkung zu schaffen, die möglichst einfach und wartungsarm arbeitet und unabhängig von den speziellen Abmessungen des Lkw nur wenige individuell anzupassende Teile erfordert. Auch das Nachrüsten eines nicht hinterachsgelenkten Lkw soll mit möglichst geringem Aufwand möglich sein.

Diese Aufgabe wird durch die kennzeichnenden Merkmale der Ansprüche 1, 3, 6, 10, 12 und 13 gelöst. Vorteilhafte Ausführungsformen ergeben sich aus den Unteransprüchen.

Die Erfindung wird am Beispiel eines LKW mit einer oder zwei Hinterachsen beschrieben, dessen eine oder beide Hinterachsen zusätzlich durch hydraulische Ansteuerung gelenkt wird, wobei die Signalübermittlung durch einen Bowdenzug geschieht, was aber prinzipiell auch durch alle anderen bekannten Übermittlungsverfahren, z.B. elektrisch, möglich ist. Ebenso kann die beschriebene Funktion des Umsetzers statt auf pneumatischem Wege auch auf alle anderen Arten, z.B. elektrisch, hydraulisch oder mechanisch, etwa mit Stellspindel und Nutenstein, realisiert werden.

Durch das Auslenken der Hinterachse mittels Hydraulikzylinder ist keine durchgängige Gestängeverbindung von der gelenkten Vorderachse zur auszulenkenden Hinterachse notwendig. Es genügt ein Hydraulikzylinder und der Anschluß an die an der Hinterachse evtl. schon vorhandene Hydraulik des Lkw.

Anstelle der aufwendigen und anfälligen elektrischen Ansteuerung des den Hydraulikzylinder steuernden Ventilblockes kann dieser auch mittels eines Bowdenzuges verstellt werden, dessen anderes Ende an beliebiger Stelle des Lkw, beispielsweise in der Nähe der gelenkten Vorderachse, durch den Lenkeinschlag der Vorderachse verstellt wird.

Dies wird in einem Umsetzer vollzogen, der an einer geeigneten Stelle des Lkw-Chassis, beispielsweise kurz hinter dem Fahrerhaus an den Rahmenlängsträgern, angeordnet werden kann, und der das Übersetzungsverhältnis zwischen dem Lenkeinschlag der Vorderachse und der daraus resultierenden Verschiebung des Bowdenzuges festlegt. Dieses Übersetzungsverhältnis kann entweder kontinuierlich verstellt werden, oder nur festgelegte Betriebsstellungen umfassen. Eine der Betriebsstellungen ist dabei immer das Übersetzungsverhältnis Null, bei dem unabhängig vom Lenkeinschlag und der Bewegung der Vorderachse keine Bewegung des Bowdenzuges und damit keine Bewegung des Ventilblockes und damit Ansteuerung des Hydraulikzylinders an der Hinterachse erfolgt. Auch ein negatives Übersetzungsverhältnis soll möglich sein, um ein Gegenlenken zu ermöglichen.

Das Übersetzungsverhältnis Null entspricht damit einer Deaktivierung der Hinterachslenkung.

In einer besonders einfachen Lösung besteht der Umsetzer aus einer schwenkbaren, i.w. senkrecht angeordneten, Grundplatte, die am Chassis des Lkw gelagert ist, und auf welcher eine Kolben-Zylinder-Einheit, beispielsweise ein Pneumatikkolben, montiert ist. Der Kolben und damit das Kolbenauge des Zylinders ist dabei von einer eingefahrenen in eine ausgefahrene Position bewegbar, wobei eine der beiden Positionen darin besteht, daß das Kolbenauge auf der Drehachse der Grundplatte liegt.

Die Grundplatte ihrerseits wird analog zum Lenkeinschlag der gelenkten Vorderachse um ihre i.w. horizontale,Schwenkachse verschwenkt, indem beispielsweise zwischen der Grundplatte - außerhalb deren Schwenkachse - und der Vorderachslenkung eine Lenkstange montiert ist. Der Abstand des Anlenkpunktes der Lenkstange an der Grundplatte zur Schwenkachse der Grundplatte beeinflußt dabei ebenfalls das Übersetzungsverhältnis. Der Bowdenzug, dessen hinteres Ende mit dem Ventilblock für die Hydraulikzylinder der Hinterachse verbunden ist, ist mit seinem vorderen Ende mit dem Kolbenauge des Pneumatikzylinders verbunden, so daß ein Lenkeinschlag der Vorderachse eine Bewegung des Bowdenzuges im vorgesehenen Übersetzungsverhältnis bewirkt, außer wenn sich das Kolbenauge genau auf der Schwenkachse der Grundplatte befindet.

Der Pneumatikzylinder ist dabei an die Druckluftanlage des Lkw angeschlossenen und über einen Ventilblock von der eingefahrenen in die ausgefahrende Position verstellbar, was mittels eines Schalters im Führerhaus des Lkw geschieht. Das Ablassen der Luft aus einem der Arbeitsräume des Pneumatikzylinders geschieht in derjenigen Richtung, in der sich der Pneumatikzylinder in die deaktivierte Stellung bewegt, über eine Drossel, in der anderen Richtung dagegen ungedrosselt. Anstelle der Drossel kann ein anderes, z.B. elektronisch/mechanisches Verzögerungselement stehen. Ebenso kann bei anderen Anwendengsfällen auch gerade der Aktivierungsvorgang verlangsamt durchgeführt werden, also jede der Arbeitsrichtungen getrennt hinsichtlich seiner Geschwindigkeit eingestellt werden kann.

Zusätzlich ist der Kolben z.B. mittels Federn vorgespannt und wird bei fehlender Druckluft dadurch automatisch in die vollständig deaktivierte Null-Lage gebracht. Bei Verstellmöglichkeit über den Nullpunkt hinweg sind hierfür zwei gegenläufige Federn zur Zentrierten Vorspannung des Kolbens im Pneumatikzylinder in der Null-Lage notwendig.

Dies führt dazu, daß die aktivierte Stellung des Umsetzers und damit Hinterachslenkung schnell geschieht, das Anfahren der deaktivierten Stellung dagegen langsam. Dadurch kann auch bei bereits zunehmender Geschwindigkeit des Lkw ohne Beeinträchtigung des Fahrverhaltens ein Außerkraftsetzen der Hinterachslenkung erfolgen, was ohnehin unabhängig von der Stellung des Wahlschalters im Fahrerhaus ab einer bestimmten Mindestgeschwindigkeit automatisch geschieht.

Das Anfahren der deaktivierten Position des Umsetzers bringt gezwungenermaßen die Hinterachse in die neutrale, nicht ausgelenkte Position, da eine Rückführung des ausgelenkten Umsetzers in die deaktivierte Stellung ja zwangsweise eine Ansteuerung des Ventiles der Hydraulikzylinder an der Hinterachse in die neutrale Mittellage bewirkt.

Aus Sicherheitsgründen kann in dieser Position die Hinterachse zusätzlich mechanisch verriegelt werden, durch beispielsweise hydraulisches Einfahren eines Sicherungsbolzens in die Hinterachslenkung.

Eine derartige, deaktivierbare Hinterachslenkung ist sowohl bei einer Achsschenkellenkung zu realisieren als auch bei einer Drehschemellenkung, die jedoch keinen Drehkranz mehr mehr benötigt.

Bei der Achsschenkellenkung wirkt dann der Hydraulikzylinder am besten auf die Spurstange der Hinterachslenkung ein. In diesem Fall ist in der Regel der Hydraulikzylinder parallel zur Spurstange fest mit dem Achskörper der Hinterachse verbunden, eventuell unterstützt vom einem zweiten Zylinder.

Eine solche Hinterachslenkung kann jedoch - unabhängig davon ob es sich um eine Rollachse oder um eine Triebachse handelt - auch im Rahmen einer Drehschemellenkung realisiert werden.

Hierbei ist dann der Achskörper der gelenkten Hinterachse um eine im wesentlichen senkrecht stehende Achse in Fahrzeugmitte gegenüber dem Chassis drehbar gelagert.

Durch Einsatz von spurstabilisierenden Elementen wie Dreieckslenkern, Längslenkern und anderen abstützenden Elementen gegenüber dem Chassis kann hierbei auf einen Drehkranz zwischen dem Achskörper und dem Chassis an der Hinterachse verzichtet werden. Dies verringert die notwendige Bauhöhe für die Achskonstruktion und damit die für die Zuladung zur Verfügung stehende nutzbare Höhe, ebenso entsteht auch ein Gewichtsvorteil.

Vorzugsweise werden dabei die die Auslenkung der Hinterachse bewirkenden Stellglieder beidseits des Drehpunktes des Achskörpers jeweils zwischen dem Achskörper und einem chassisfestem Punkt mittels Kugelgelenken befestigt, so daß auch bei jeder Lenkstellung eine volle Einfederung der Hinterachse möglich ist.

Die Spurstabilisierung erfolgt durch den Einsatz eines an sich bekannten Dreieckslenkers, der an einem Punkt nahe der Fahrzeugmitte, jedoch vor bzw. hinter der Drehachse am Achskörper angreift, der zu diesem Zweck einen entsprechenden Hebelfortsatz besitzt. Auch die Streben des Dreieckslenkers, die von der Fahrzeugmitte aus schräg nach außen zu chassisfesten Punkten abstreben und in etwa waagerecht angeordnet sind, sind an Chassis und Achskörper mittels Kugelgelenken befestigt.

Zusätzlich wird der Achskörper durch eine Mittelstrebe abgestützt, die sich auf der bezüglich der Dreieckslenkung gegenüberliegenden Seite des Achskörpers befinden.

Wenn beispielsweise die Dreieckslenker vom Achskörper aus oberhalb des Achskörpers nach vorne abstreben, so ist die zusätzlich abstützende Strebe am Achskörper mittig unterhalb des Achskörpers nach vorne zum Chassis abstrebend angeordnet. Dabei befindet sich wiederum der Verbindungspunkt zwischen der Strebe und dem Achskörper außerhalb, in diesem Falle also vor, der Drehachse des Achskörpers gegenüber dem Chassis. Auch die Befestigung dieser Zusatzstrebe geschieht mittels Kugelgelenken, um eine volle Beweglichkeit des Achskörpers sicherzustellen.

Die Abstützung mittels Strebe kann auch durch ein umgelenktes, nicht dehnbares Seil, vorzugsweise ein Stahlseil oder ein anderes Zugelement, realisiert werden, welches mit seinen Enden an den beiden Seiten des Achskörpers beidseits der Drehachse befestigt ist und über eine fahrzeugmittige, chassisfeste Umlenkrolle geführt ist.

Anstelle der mittigen Strebe oder des über die Rolle umlaufenden Seiles kann auch ein Hebelgestänge verwendet werden, bei dem jeweils eine Längsstrebe auf jeweils einer Seite des Achskör- pers angreift und beispielsweise nach vorne ragt, und mit ihrem vorderen freien Ende mit den freien Enden einer Querstrebe gelenkig verbunden ist, welche mittig drehbar am Chassis gelagert ist. Da auch die Befestigung der Längsstreben am Achskörper gelenkig ausgebildet ist, übernimmt ein solcher Hebelmechanismus die gleiche stabilisierende Aufgabe wie das über die Rolle umlaufende, nicht dehnbare Zugelement in Form eines Seiles.

Bei einer derart gestalteten Drehschemellenkung wird die Federung durch hydropneumatische Federungselemente übernommen, die beidseits am Achskörper in der Nähe der Räder zwischen Achskörper und Chassis angeordnet sind. Die Verbindungen zu Chassis und Achskörper sind gelenkig ausgebildet, um eine Schwenkbewegung der hydropneumatischen Federungselemente bei Einfederung und/oder Auslenkung des Achskörpers mitmachen zu können. Die Längenänderung des hydropneumatischen Federelementes allein durch Auslenkung des Achskörpers wird durch die bekannte gesteuerte Zufuhr oder Abfuhr von Hydraulikmedium in den Arbeitsraum des hydropneumatischen Federelementes ausgeglichen. Die diesbezügliche Steuerung wird dabei vorzugsweise in Abhängigkeit von der Auslenkung der auszulenkenden Hinterachse arbeiten, die dabei vorzugsweise bereits an dem in der Nähe der direkt gelenkten Achse angeordneten Umsetzer abgenommen wird. Der Umsetzer erzeugt somit nicht nur ein Steuersignal für das Steuerelement am Stellglied der auszulenkenden Achse, sondern auch für das Steuerelement zum Nachregeln des hydropneumatischen Federungselementes.

Eine Alternative zu dieser Lösung ist die Führung des Achskörpers mittels eines Tunnelbockes, der quasi als begrenzt ausschlagendes Kugelgelenk wirkt, jedoch wesentlich kostengünstiger und einfacher herzustellen ist. Dabei wird mittig an oder auf dem Achskörper, der gegenüber dem Chassis mittels Blattfedern, Schraubenfedern oder einer hydropneumatischen Federung abgefedert ist, ein solcher Tunnelbock oder ein ähnlich wirkendes Gelenk wie etwa ein Kugelgelenk befestigt. Der Tunnelbock ist sowohl mit seiner Längsstrebe als auch mittels einer Querstrebe jeweils gelenkig mit dem Chassis verbunden, und kann dadurch die durch die Auslenkung sowie das Einfedern verursachten Bewegungen des Achskörpers mitmachen. Durch den Tunnelbock hindurch erstreckt sich ein Parallelkörper, der an seinem einen Ende am Chassis, beispielsweise an einem der Längsträger des Chassis, und auf der gegenüberliegenden Seite vom Tunnelbock am Achskörper befestigt, sodaß ein möglichst großer Abstand zwischen diesen gelenkigen Befestigungspunkten gegeben ist. Durch diese Hebelanordnungen werden die sonst von den Dreieckslenkern 29 aufzunehmenden Kräfte aufgenommen.

Die oben beschriebene Achslenkung kann - insbesondere bei der Nachrüstung - unterschiedliche Probleme bereiten, je nach Art der gewünschten Federung der nachzulenkenden Achse, die zudem oft Bestandteil einer Doppelachs-Anordnung ist.

Da das Chassis eines LKW in der Regel aus zwei parallel laufenden, gegenüber den Außenkanten nach innen versetzten, Längsträgern, meist in der Profilform eines nach innen offenen U-Profiles oder Doppel-T-Profiles, besteht, sind zum Beispiel bei nicht gelenkten Hinterachsen die Räder nur soweit außerhalb dieser Längsträger positioniert, daß gerade die erforderlichen mechanischen Elemente, etwa Federungselemente, dazwischen Platz finden. Die frei auskragende Länge der Räder gegenüber dem letzten, weiter innen liegenden Unterstützungspunkt am Chassis soll ja so gering wie möglich sein.

Wird eine derartige Hinterachse jedoch nachgerüstet zur lenkbaren Achse, so nähert sich der vorderste oder hinterste Punkt des Reifens je nach Lenkeinschlag gegenüber der Geradeausstellung dem Längsträger des Rahmens an und kann dabei an den dazwischen angeordneten Bauteilen unzulässigerweise schleifen.

Falls die Federung der Achse hydropneumatisch erfolgt, oder auf hydropneumatische Federung beim Nachrüsten der Nachlenkung umgebaut wird, ist dieses Problem weniger groß, da in diesem Fall zwischen den Längsträgern des Chassis und den Rädern nur die relativ schmalen Hydraulikkolben untergebracht werden müssen. Diese Lösung sit jedoch aufgrund der hohen Kosten bereits der Hydraulikkolben einer hydropneumatischen Federung und der benötigten Anzahl von mindestens vier solcher Kolben pro Doppelachse sehr teuer.

Beim Ausweichen auf weniger kostenintensive Lösungen bieten sich Luftfederung und mechanische Federung an:
Luftfederung ist vor allem dann zu bevorzugen, wenn bei einem Nachrüstungsfall ursprünglich bereits Luftfederung vorhanden war. Normalerweiser werden die Luftbälge einer Luftfederung ausschließlich in senkrechter Richtung belastet. Um nach dem Auslenken der Achse eine Belastung der Bälge in der richtigen, schrägen Richtung zu gewährleisten, müssen die Luftbälge an ihrem oberen und unteren Ende gegenüber dem Chassis beziehungsweise den Achskörpern zunächst einmal gelenkig befestigt werden. Durch eine zusätzliche, aus Führungsrohr und darin laufendem Führungskolben, bestehende Führungseinheit, die parallel, vorzugsweise im inneren, und zwar zentral im inneren des Luftbalges angeordnet ist, kann auf einfache Art und Weise sicher eine Belastung der Luftbälge in der einzig zulässigen Richtung, nämlich entlang ihrer Längsmittelachse, erreicht werden.

Die aus Kolben und Zylinder bestehende Führungseinheit hat dabei keinerlei drosselnde und somit federnde Funktion, sondern sollte der Relativbewegung einen möglichst geringen Widerstand entgegen setzen.

Die andere Möglichkeit besteht darin, den auszulenkenden Achskörper beziehungsweise wenigstens einen der Achskörper einer Doppelachse, zu welcher auch die auszulenkende Achse gehört, mechanisch gegenüber dem Chassis zu federn, also mittels Blattfeder-Paketen, Schraubenfedern oder sogenannten Gummipaketen, nämlich übereinander gestapelten und miteinander verbundenen massiven Gummiklötzen und Stahlscheiben.

Bei einer herkömmlichen Blattfederung sitzt das Blattfeder-Paket mit seiner Mitte auf einem waagerecht, seitlich vom Chassis abstrebenden Befestigungsbolzen an dem es mittels kräftiger Klammern befestigt ist. An den Enden des in Längsrichtung verlaufenden Blattfeder-Paketes sind die Achskörper einer Doppelachs-Anordnung beziehungsweise die Enden der in Längsrichtung weisenden Ausleger einer einzelnen Achse gelenkig befestigt.

Gegenüber einer derartigen, konventionellen Blattfederung ist die Blattfederung einer gemäß vorliegender Erfindung zusätzlich lenkbaren Achse bei gleicher Belastbarkeit schwächer auslegbar, beispielsweise durch Verringerung der Breite des Blattfeder-Paketes in der Aufsicht. Dies ist möglich, da im Fall einer ungelenkten, blattgefederten Achse die Blattfedern nicht nur vertikale, sondern auch auf den Achskörper einwirkende Querkräfte aufnehmen müssen.

Ist der Achskörper dagegen mit der oben beschriebenen Lenkmöglichkeit ausgestattet, nehmen deren Bauteile, also die längsverlaufenden Hydraulikkolben, die Horizontalquerkräfte auf, so daß das Blattfeder-Paket lediglich die auftretenden Vertikalkräfte bewältigen können muß.

Zusätzlich soll der Achskörper der auszulenkenden Achse nicht direkt an den Enden des Blattfeder-Paketes befestigt werden, sondern in einem im wesentlichen senkrechten Abstand hierzu über ein Zwischenelement, so daß bei unveränderter Position des als Befestigungspunkt dienenden Auges am Ende des Blattfederpaketes durch verschwenken des Zwischenelementes ein Auslenken des Achskörpers möglich ist.

Daher ist es möglich, das Blattfeder-Paket - in der Seitenansicht gesehen - nicht dachförmig gebogen oberhalb des Befestigungsbolzens am Chassis verlaufen zu lassen, sondern wannenförmig gebogen unterhalb des Befestigungsbolzens durchlaufen zu lassen. Dadurch kommen einserseits die Augen an den Enden des Blattfeder-Paketes noch oberhalb des Befestigungsbolzens zu liegen, wodurch der Abstand zwischen dem Achskörper und dem Ende des Blattfeder-Paketes vergrößert wird.

Zusätzlich kann die Verbindung zwischen dem Blattfeder-Paket und dem Befestigungsbolzen durch die notwendigen Klammern wesentlich schwächer dimensioniert werden, da die Belastung auf das Blattfeder-Paket von den Achskörpern aus nur von unten nach oben wirkt, und damit in der Richtung, in der das Blattfeder-Paket in der Mitte ohnehin gegen den Befestigungsbolzen drückt.

Weiterhin ist aufgrund der in der Aufsicht schmaleren Ausbildung des Federpaketes zusätzlicher Freiraum zum Einschlagen der Räder der auszulenkenden Achse gewonnen.

Bei einer Doppelachs-Anordnung kann an Stelle des Blattfeder-Paketes auch ein im wesentlichen nicht federnder, jedoch in der Aufsicht noch schmalerer zweiarmiger Hebel eingesetzt werden, der wiederum in Längsrichtung verläuft und um eine waagrechte, quer zum LKW verlaufende, Achse gegenüber dem Chassis gelagert ist. Dieser zweiarmige, im wesentlichen waagrecht liegende, Hebel wird ebenso wie das Blattfeder-Paket in der Regel auf den Außenseiten der Rahmen-Längträger befestigt sein.

Auch in diesem Fall liegen die Achskörper unterhalb der Enden dieser in Längsrichtung verlaufenden, zweiarmigen Hebel, wobei die Federungsfunktion in die im wesentlichen senkrecht angeordneten Verbindungselemente zwischen den Enden des Hebels und der Achskörper hinein verlegt ist, in dem als Verbindungselemente nicht einfache, an ihren Enden gelenkig befestigte, Hebel verwendet werden, sondern Schraubenfedern oder Gummipakete.

Ebenso kann als federndes Element ein ganzes Blattfederpaket verwendet werden, dessen eines Ende somit mit dem Ende des zweiarmigen Hebels in Verbindung steht, während das andere Ende des Blattfederpaketes mit dem Chassis in Verbindung steht. Unter der Mitte des Federpaketes ist dann der eine Achskörper angeordnet und mit dem Blattfederpaket verbunden. Bei diesem Achskörper handelt es sich vorzugsweise um eine nicht lenkbare Achse, meist die Triebachse. Der Vorteil dieser Konstruktion liegt darin, daß keine Dreieckslenker bei dieser Achse notwendig sind.

Der Nachteil, daß zwischen den beiden mit diesem zweiarmigen Hebel in solcher Art verbundenen Achskörpern ein geringerer Höhenversatz als bei der Lösung ohne Blattfederpaket zusätzlich zum zweiarmigen Hebel realisierbar ist, hat für viele Anwendungsfälle, beispielsweise Verteilerfahrzeuge in städtischen Gebieten, keine Bedeutung.

Eine weitere Verbesserung läßt sich mittels Umkehrung der Kraftrichtung erzielen, indem bei der eben beschriebenen Anordung an Stelle eines einzigen, zweiarmigen Hebels jedem Achskörper in der Regel zwei, nämlich an den beiden Rahmenlängsträgern befestigte, zweiarmige Hebel zugeordnet sind, die ebenfalls wiederum gegenüber dem Chassis schwenkbar gelagert sind, vorzugsweise jedoch eine gewinkelte Form aufweisen: Dabei ragt ein Schenkel dieser Winkelhebel zumindest nicht vollständig waagrecht, also im wesentlichen senkrecht und vorzugsweise nach oben ab. Die Enden dieser sogenannten senkrechten Schenkel sind über ein längenstabiles Element, beispielsweise ein Stahlrohr, gelenkig miteinander verbunden.

Jeder der beiden Winkelhebel weist ferner einen im wesentlichen waagrechten Schenkel auf, unter dessen freiem Ende wiederum der Achskörper im Abstand angeordnet und über Verbindungselemente befestigt ist. Wenigstens die Verbindungselemente eines der Achskörper müssen dabei federnde Verbindungselemente wie Schraubenfedern oder Gummipakete sein.

Wenn in diesem Fall eine der Achsen der Doppelachs-Anordnung einfedert, wird der entsprechende Winkelhebel ausgelenkt und über das längenstabile Verbindungselement der andere Achskörper in Gegenrichtung belastet, also ausgefedert.

Im Bereich zwischen den beiden Achskörpern ist somit keine Längsverbindung im Bereich der Befestigungspunkte der Achskörper notwendig, also in dem Bereich, in dem die Reifen einer auszulenkenden Achse durch den Lenkeinschlag schleifen könnten. Denn das Verbindungselement zwischen vorderen und hinteren Winkelhebeln kann beispeilsweise oberhalb der Rahmen-Längsträger oder auch weiter zur Mitte des Chassis hin versetzt werden.

Ein weiterer Vorteil besteht darin, daß bei einem herkömmlichen Chassis in Seitenansicht betrachtet die Längsträger von dem Befestigungspunkt für die Hinterachsen aus nach vorne und nach hinten betrachtet nach unten geneigt sind aufgrund des Eigengewichtes und der Belastung durch die Ladung. Somit herrscht in der oberen Hälfte des Querschnittes der Rahmenlängsträger Zugbelastung im Bereich der Hinterachse vor, aufgrund dieser Durchbiegung.

Wenn jedoch die Anordnung mit den Winkelhebeln so angeordnet wird, daß der Drehpunkt der Winkelhebel in der oberen Hälfte des Querschnittes der Rahmen-Längträger liegt, werden durch das ausschließlich auf Zug belastete längsgerichtete Verbindungselement zwischen den beiden vorderen und hinteren jeweiligen Winkelhebeln die Befestigungspunkte der Winkelhebel in den beiden Rahmenlängsträgern gegeneinander auf Druck belastet, und kompensieren damit einen Teil der in dieser oberen Querschnittshälfte vorliegenden Zugbelastung. Dadurch wird der Rahmen insgesamt entlastet mit den bekannten Vorteilen entweder einer schwächeren Dimensionierung des Rahmens oder einer höhere Belastbarkeit.

Ein grundlegendes Problem bei auslenkbaren Hinterachsen besteht in der Rückstellung in die neutrale Rücklage, die zuverlässig auch dann stattfinden muß, wenn z.B. die auslenkende Hydraulik ausfällt. Bei nur geringen Auslenkungswinkeln werden die Lenkungen so augelegt, daß die Rückstellung des ausgelenkten Achskörpers allein durch die bei Geradeausfahrt des Fahrzeuges unterschiedlich stark auf die beiden Räder dieser ausgelenkten Achse einwirkenden Kräfte wieder in ihre Mittellage zurückgestellt werden. Diese automatische Rückstellung hängt jedoch in der Praxis von einer Vielzahl von Parametern wie Haftung der Fahrbahn, Beladungszustand des Fahrzeuges, auslenkungswinkel der zu unrecht eingeschlagenen Hinterachse etc. ab.

Für bestimmte Anwendungen ist es daher sinnvoll, eine aktive automatische Rückstellung vorzusehen. Diese kann beispielsweise in Federelementen bestehen, die beidseits des Mittelpunktes des Achskörpers jeweils zwischen dem Achskörper und dem Chassis angeordnet sind, und wobei sich die federnden Elemente dann in ihrem entspannten Zustand befinden, wenn sich der Achskörper in der neutralen Nulllage befindet. Bei ausgelenktem Achskörper und Ausfall der ansteuernden Hydraulik wird der Achskörper dann durch die Federkraft automatisch in die Nulllage zurückgedrückt. Als federnde Elemente werden dabei vorzugsweise Schraubenfedern, ausgelegt als Druckfedern, verwendet.

Werden diese nicht nur auf einer Seite, sondern beidseits des Drehpunktes des Achskörpers angeordnet, so wird jeweils eine der beiden Federn bei der Auslenkung auf Druck beansprucht und drückt die Achse bei Ausfall der Hydraulik in die Neutralstellung zurück. Bei Verwendung von Hydraulikzylindern zum Auslenken der Achse wird vorzugsweise die Feder direkt um die Kolbenstange herum angeordnet.

Anstelle der Rückstellung mittels Federkraft kann auch die in der Regel senkrecht wirkende Normalkraft, die zwischen Chassis und Achskörper wirkt, verwendet werden. Hierzu wird entweder der Achskörper an den senkrechten Hebeln bzw. Federn oder diese gegenüber den Enden des Blattfederpaketes oder des zweiarmigen Hebels nicht gelenkig, jedoch fest bezüglich des Drehpunktes, miteinander verbunden, sondern es wird eine Art Kulissenführung an dieser Stelle verwendet:
Dabei ist der Kulissenstein mit dem unteren Bauteil, also dem Achskörper oder dem darüber angeordneten, senkrechten Hebel bzw. dem senkrechten Federelement, verbunden und die Kulissenführung mit dem darüber liegenden Bauteil. Die Kulissenführung hat dabei eine nach oben offene, konkave Gestalt, wobei der tiefste Punkt an der Stelle liegt, an der die Neutralstellung des Achskörpers ist. Durch die Normalkraft wird der Kulissenstein nach seiner Auslenkung wieder an den tiefsten Punkt der Kulisse zurückgeführt. Eine besonders einfache und geringen Kraftaufwand erfordernde Kulissenführung besteht in einer Wanne, auf deren konkav gewölbten Oberseite eine Rolle als Kulissenstein hin- und herlaufen kann. Selbstverständlich sind die maximalen Auslenkungen dabei begrenzt, sodaß ein vollständiges Herabfahren des Kulissensteines bzw. der Rolle von der Kulissen verhindert wird.

Eine Ausführungsform gemäß der Erfindung ist im folgenden beispielhaft näher erläutert. Es zeigen
Fig. 1 eine Aufsicht auf eine gelenkte Hinterachse mit Achsschenkellenkung
Fig. 2 eine Seitenansicht des Umsetzers für die Hinterachslenkung,
Fig. 3 eine Aufsicht auf eine Drehschemellenkung,
Fig. 4 eine Seitenansicht der Drehschemellenkung gemäß Fig. 3,
Fig. 5 eine Aufsicht auf ein Chassis mit einer Doppelachse,
Fig. 6 eine Seitenansicht in Blickrichtung VI der Fig. 5,
Fig. 7 eine Seitenansicht mit einem zweiarmigen Hebel, ähnlich der Ansicht der Fig. 6,
Fig. 8 eine Detaildarstellung einer Luftfederung an einer auslenkbaren Achse und
Fig. 9 eine Seitenansicht bei einer Doppelachse mit Zwischenhebel-Gestänge,
Fig. 10 eine Darstellung ähnlich Fig. 8,
Fig 11 eine Darstellung ähnlich Fig. 7 und
Fig. 12 eine Ansicht einer Achskonstruktion in Längsrichtung.

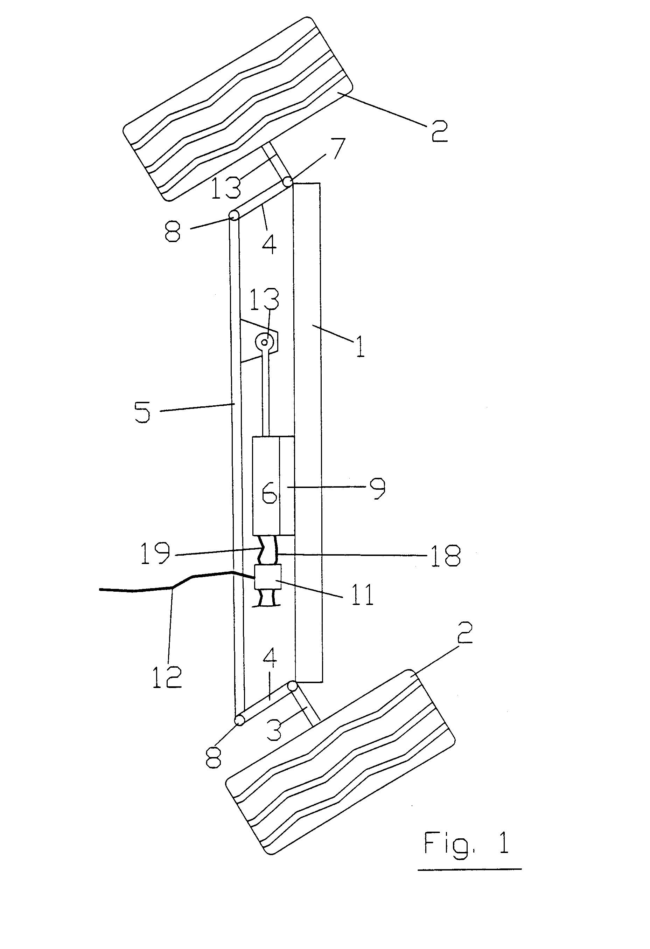

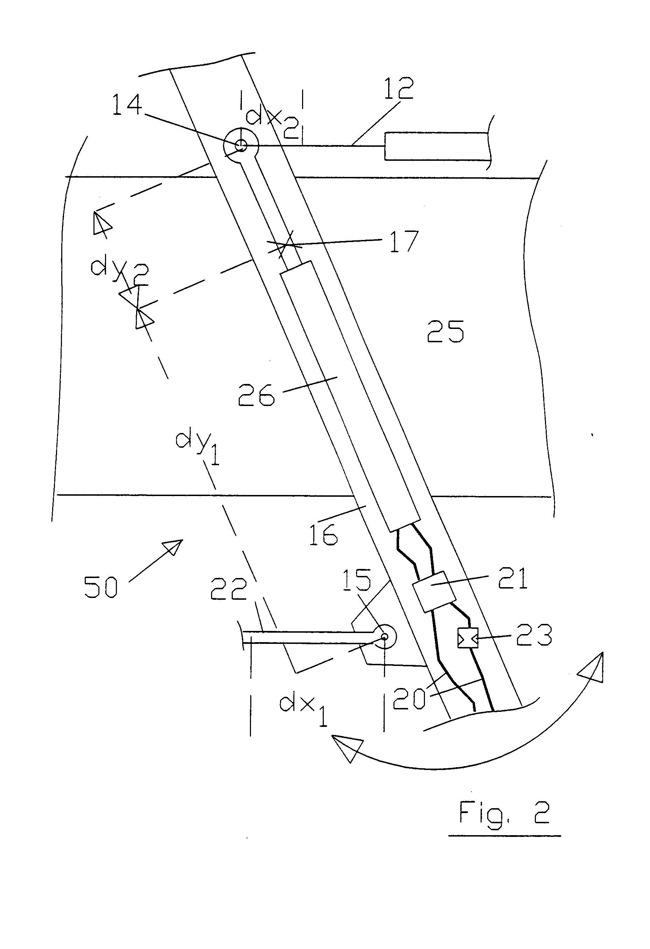

In Fig. 1 und 2 ist eine hydraulisch-mechanische Lösung dargestellt.

In Fig. 1 ist der Achskörper 1 zu erkennen, an dessen Achsschenkel-Lagerungen 7 die nach außen abstrebenden Achsschenkel 3 schwenkbar gelagert sind, um welche sich die Räder 2 drehen. Etwa im rechten Winkel zu den Achsschenkeln 3 erstrecken sich drehfest mit diesen verbunden die Lenkhebel 4 nach vorne und damit etwa rechtwinklig zum Achskörper 1, wobei die freien Enden der Lenkhebel 4 über eine parallel zum Achskörper 1 verlaufende Spurstange 5 gelenkig miteinander verbunden sind.

Um die Hinterachse aus der neutralen Mittelstellung auszulenken, ist somit eine Verlagerung der Spurstange 5 gegenüber dem festen Achskörper 1 erforderlich.

Dies geschieht mittels eines Hydraulikzylinders 6, der mit Hilfe eines den richtigen Abstand ermöglichenden Zwischenbleches 9 am Achskörper 1 angeschweißt ist, wobei das Stangenauge 13 des Hydraulikzylinders 6 mit der Spurstange 5 verbunden ist. Aus- bzw. Einfahren des Stangenauge 13 bewirkt damit eine Veränderung des Lenkeinschlages der Räder 2 an der Hinterachse.

Der Hydraulikzylinder 6 ist in beide Richtungen beaufschlagbar und wird über Hydraulikleitungen 18, 19 von der Lkw-Hydraulik versorgt über einen zwischengeschalteten Ventilblock 11, der neben einer Neutralstellung, die die gegenwärtige Stellung des Hydraulikzylinders 6 unverändert läßt, ein Einfahren und ein Ausfahren bewirken kann, wobei das Maß des Ein- und Ausfahrens mit proportional zur Stellung des Ventilblockes 11 ist.

Der Ventilblock 11 wird mechanisch mittels eines Bowdenzuges 12 in Bewegung versetzt, der entlang des Lkw-Chassis zum Umsetzer verläuft, der in Figur 2 dargestellt ist.

Dieser Umsetzer besteht aus einer Grundplatte 16, die schwenkbar an einem Rahmenlängsträger 25 des Lkw-Chassis befestigt ist.

Die Grundplatte 16 ist im wesentlichen senkrecht angeordnet und um eine im wesentlichen waagerechte Schwenkachse 17 verschwenkbar.

Die Grundplatte 16 wird um diese Schwenkachse 17 mittels einer Lenkstange 22 bewegt, die an der Grundplatte 16 über ein Auge 15 angelenkt ist und den Lenkeinschlag der Vorderachse, mit der die Lenkstange 22 ebenfalls verbunden ist, direkt eine Schwenkbewegung der Grundplatte 16 umsetzt.

Auf der Grundplatte befindet sich ein Pneumatikzylinder 26, der so montiert ist, daß sich das Kolbenauge 14 des Kolbens in der vollständig eingefahrenen Position mit der Schwenkachse 17 deckt. Das Kolbenauge 14 ist mit dem vorderen Ende des Bowdenzuges 12 verbunden, dessen hinteres Ende mit dem Ventilblock 11 an der Hinterachse verbunden ist.

Der Pneumatikzylinder 26 ist - abhängig von der Stellung des Ventilblockes 24 - von einer vollständig eingefahrenen Stellung, die einem Übersetzungsverhältnis Null und damit einer deaktivierten Stellung der Hinterachslenkung entspricht, in eine vollständig ausgefahrene Position bringbar, in der dy₂ Abstand des Kolbenauges 14 von der Drehachse 17 ist. Der Abstand des Auges 15 der Verbindung zwischen der Lenkstange 22 und der Grundplatte 16 zur Schwenkachse 17 beträgt dyₗ. Damit betägt das Übersetzungsverhältnis des in Fig. 2 dargestellten Umsetzers in der aktivierten Position dy₂/dy, , da eine Verlagerung der Lenkstange 22 um die Strecke dxi eine Verlagerung des Anfangspunktes des Bowdenzuges 12 um die Strecke dx₂ ergibt.

Somit kann das Übersetzungsverhältnisses des Umsetzers der Fig. 2 sowohl durch Wahl eines Pneumatikzylinders 26 mit der gewünschten Ausfahrlänge ty₂ als auch durch Festlegung des Abstandes d_{Y1} des Auges 15 von der Schwenkachse 17 beeinflußt werden. Dadurch kann durch Wahl des geeigneten Pneumatikzylinders fast jedes gewünschte Übersetzungsverhältnis des Umsetzers je nach Erfordernis des speziellen Lkw erfolgen. Zusätzlich kann der Umsetzer an jeder gewünschten Stelle im vorderen Teil des Lkw montiert werden, was insbesondere das Nachrüsten der Hinterachslenkung wesentlich erleichtert. Ein notwendiger Bowdenzug in der gewünschten Länge kann mit geringsten Kosten beschafft und angepaßt werden.

Der Pneumatikzylinder 26 wird über eine Druckluftleitung 20 über einen Ventilblock 24 beaufschlagt, wobei sich in derjenigen Auslaßleitung zwischen dem Pneumatikzylinder 26 und dem Ventilblock 23, über die die Luft aus dem Pneumatikzylinder austritt, wenn sich dieser in die deaktivierte Position bewegt, eine Drossel 13 eingebaut, um den Deaktivierungsvorgang am Umsetzer langsamer ablaufen zu lassen als den Aktivierungsvorgang.

Der Ventilblock 23 wird elektrisch angesteuert mittels eines Schalters im Fahrerhaus, dessen gewählte Stellung jedoch überlagert wird von einer automatischen geschwindigkeitsabhängigen Steuerung, die den Umsetzer 25 ab einer gewissen Mindestgeschwindigkeit des Lkw automatisch in die die deaktivierte Stellung bringt.

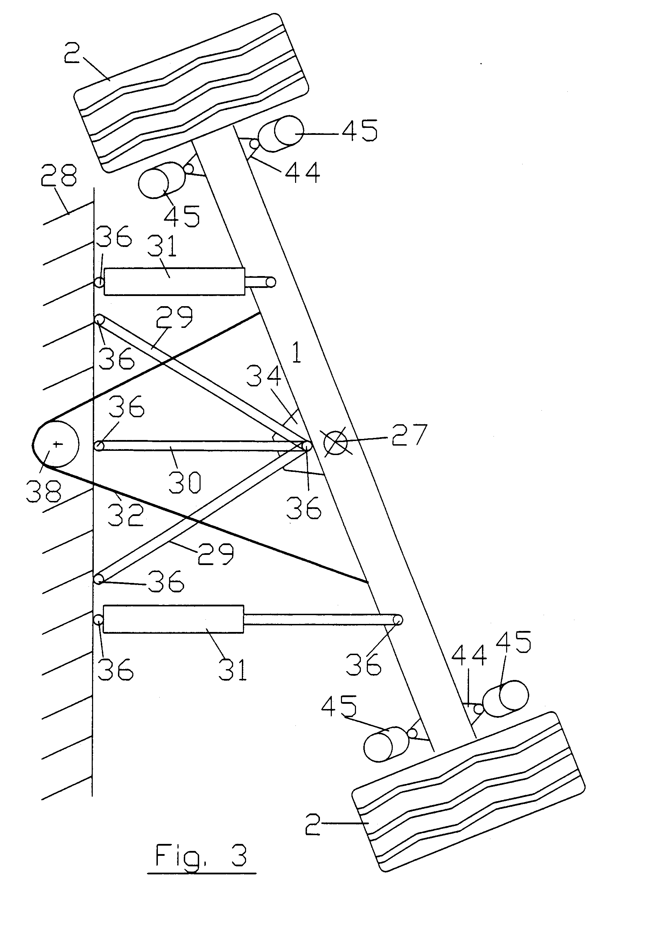

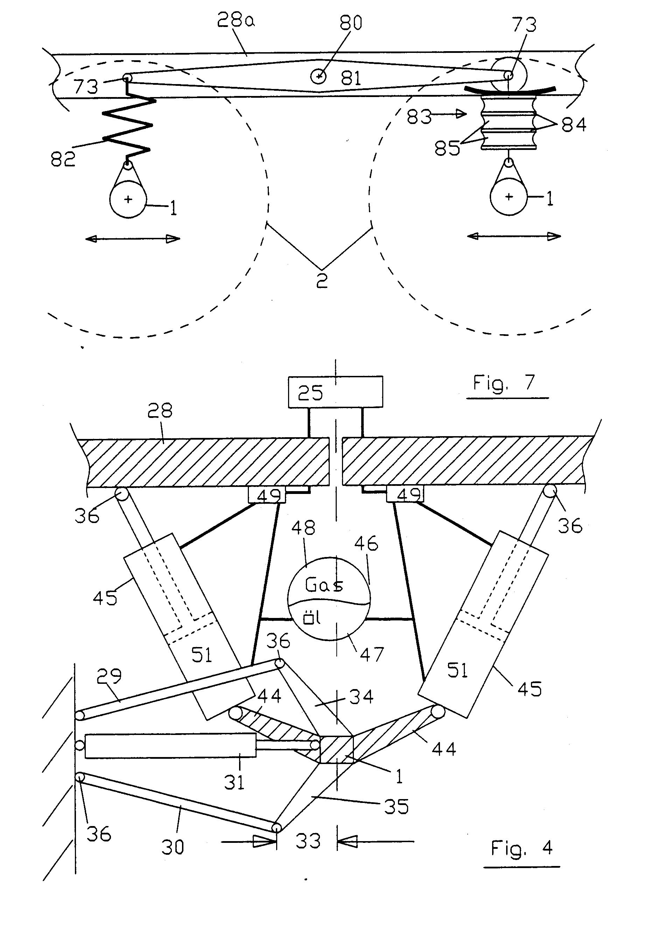

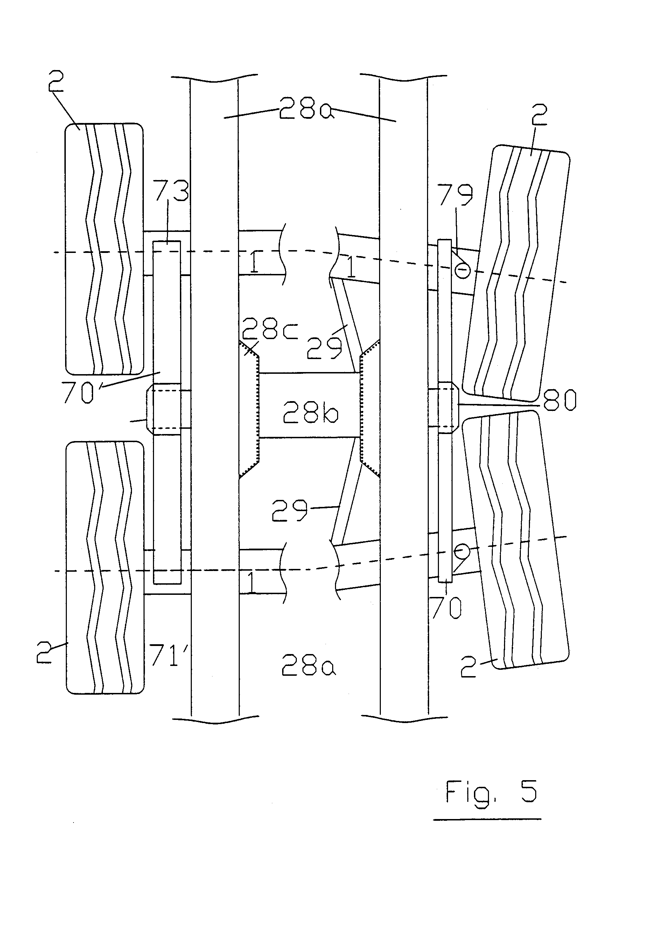

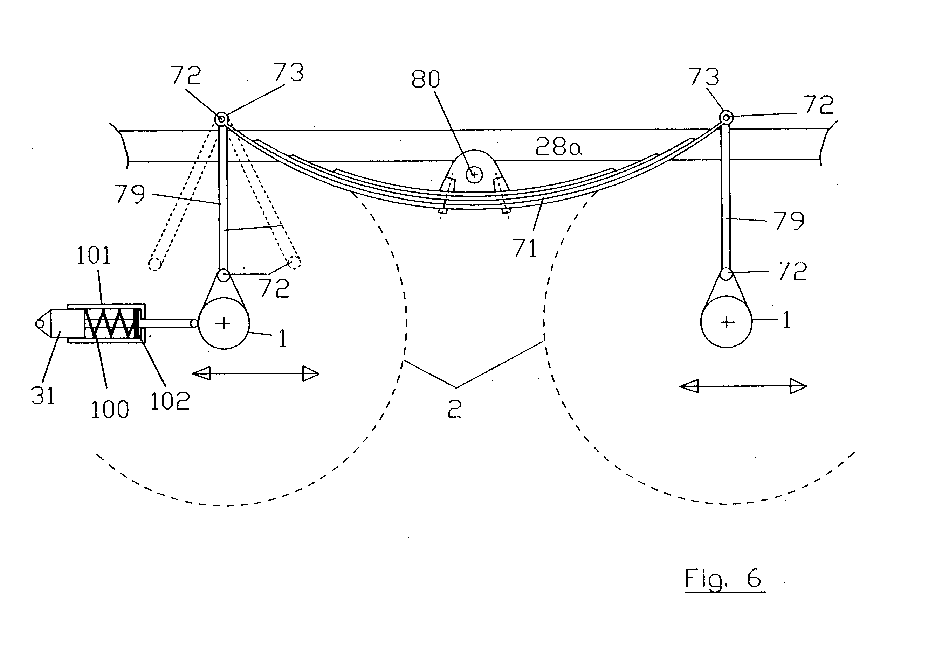

In den Figuren 3 und 4 ist eine Realisierung der Hinter-achslenkung an einer Drehschemellenkung gezeigt. Dabei ist - wie in Figur 3 zu erkennen - der Achskörper 1, indem die Räder 2 gelagert sind, insgesamt um eine etwa senkrecht verlaufende Drehachse 27 gegenüber dem Chassis drehbar gelagert.

Eine ausreichende Abstützung des Achskör- pers 1 gegenüber dem Chassis erfolgt dabei über entsprechende spurstabilisierende Elemente sowie die eingesetzten, die Auslenkung des Achskörpers 1 bewirkenden Hydraulikzylinder 31, wodurch auf einen Platz - und gewichtsintensiven, großen Drehkranz zwischen Achskörper und Chassis verzichtet werden kann.

Die Hydraulikzylinder 31 greifen dabei jeweils im gleichen Abstand beidseits von der Drehachse 27 mit der Fahrzeugmitte einerseits am Achskörper 1 und andererseits am Chassis 28, und sind mit diesen über Kugelgelenke 36 verbunden.

Die Hydraulikzylinder 31 können dabei etwa in Höhe des Achskörpers 1 an diesem angreifen, wie die Seiten-Ansicht der Figur 4 zeigt.

Oberhalb der Ebene des Achskörpers verläuft dagegen der Dreiecklenker 29, der einerseits mit einem nach oben aufragenden Hebel 34, der fest mit dem Achskörper 1 verbunden ist, und andererseits mit chassisfesten Punkten wiederum mittels Kugelgelenken 36.

Der Verbindungspunkt zum Hebel 34 des Achskörpers 1 liegt dabei nicht auf oder seitlich der Drehachse 27, sondern vor oder hinter dieser Ebene, um eine ausreichende Stabilisierung der Achse zu ermöglichen. Zur weiteren Stabilisierung der Achse dient entweder eine mittig angeordnete Strebe 30 oder ein Seil 32, wobei beide Alternativen gemeinsam in Figur 3 eingezeichnet sind, während der besseren Übersichtlichkeit halber in Figur 4 nur die Lösung mit Strebe 30 eingezeichnet ist. Das Seil 32 würde sich jedoch in der gleichen Höhenlage der Figur 4 befinden.

Bei der Strebe 30 handelt es sich um eine in Fahrzeugmitte zwischen dem Chassis, dem Achskörper 1 über Kugelgelenke 36 angeordnete Strebe, die sich oberhalb der Ebene des Achskörpers befindet, im Gegensatz zu den Dreieckslenkern 29.

Ferner ist die Strebe 30 mit Nachlauf 33 am Achskörper 1 angelenkt, indem dieser einen nach unten ragenden Hebel aufweist, dessen freies Ende sich mittig vor der Drehachse 27 befindet.

Bei der Lösung mit einem Seil 32 greifen die freien Enden des Seiles 32 an dem Achskörper 1 beidseits der Drehachse an. Das Seil 32 ist dabei über eine chassisfeste, in Fahrzeugmitte angeordnete Umlenkrolle 38 geführt. Zur Erfüllung der Abstützfunktion muß das Seil 32 oder ein äquivalentes Zugelement selbstverständlich im gespannten Zustand eingebaut sein und darf nur sowenig wie möglich dehnbar sein.

Wie in Figur 3 dargestellt, bilden dabei vorzugsweise die Hydraulikzylinder 31 die am weitesten außen liegenden Abstützelemente für die Hinterachse, um eine möglichst feinfühlige Auslenkung des Achskörpers 1 gegenüber dem Chassis bewerkstelligen zu können. Selbstverständlich müssen die Hydraulikkolben 31 zur Bewirkung einer Auslenkung gegensinnig angesteuert werden, was vorzugsweise über einen gemeinsamen Ventilblock geschieht, der jedoch von einem gemeinsamen Umsetzer aus angesteuert werden kann.

Die Federung bzw. Dämpfung der auszulenkenden Hinterachse kann dabei nicht ohne weiteres von den bisher üblichen Federelementen übernommen werden, da sich die Länge des Federelementes, also der Abstand zwischen den Befestigungspunkten des Federelementes an dem Achskörper einerseits und dem Chassis andererseits, nicht nur beim Einfedern eines Rades, sondern auch durch das Auslenken des Achskörpers ändert.

Es werden deshalb hydropneumatische Elemente 45 im wesentlichen senkrecht wirkend und über Kugelgelenke 36 angelenkt zwischen dem Chassis 28 und dem Achskörper 1 angeordnet.

Um die notwendigen Kraftaufnahmen sicherzustellen, sind beidseits der Drehachse 27 jeweils zwei hydropneumatische Federelemente 45 angeordnet, die dabei jeweils vor und hinter dem Achskörper 1 an entsprechend angeordneten Auslegern 44 des Achskörpers 1 angreifen. Dadurch können die einzelnen Elemente 45 entsprechend klein dimensioniert werden und ermöglichen eine sehr niedrige Anordnung des Chassis und damit der Ladefläche, zumal - zuzüglich zu den gezeichneten Lösungen - die Ausleger 44 vom Achskörper aus nach unten streben können und dadurch die für das hydropneumatische Federelement zur Verfügung stehende Baulänge zum darüberliegenden Chassis größer wird.

Bei Verwendung von nur einem hydropneumatische Element an jedem Ende des Achskörpers steht hierfür nur die Höhe oberhalb des Achskör- pers zur Verfügung.

Die Verwendung der Kugelgelenke 36 zum Anlenken der Elemente 45 behindern in keiner Weise die Bewegungen des Achskörpers 1 mit den Rädern 2, unabhängig von der Art oder Kombination von Ein- und Ausfederung sowie Auslenkung des Achskörpers.

Die hydropneumatischen Federelemente 45 bestehen dabei in an sich bekannter Weise aus einem Hydraulikkolben, dessen Arbeitsraum 51 mit dem Ölspeicherteil 47 einer Speicherblase 46 in Verbindung steht, wobei die Speicherblase 46 über eine Membran vom Ölspeicherteil 47 getrennt einen Gasspeicherteil 48 aufweist, der in der Regel mit Stickstoff gefüllt ist. Dieses komprimierbare Gas wird über das vorgegebene Maß hinaus komprimiert, falls durch Stöße auf das Rad das ÖI im Arbeitsraum 51 des hydropneumatischen Federelementes 45 zusätzlich unter Druck gesetzt wird, und damit auch das ÖI im Speicherteil 47.

Dabei wird das ÖI im Arbeitsraum 51 über einen Ventilblock 49 vom Reservoir aus nachgefüllt oder entleert, je nachdem, wie die Größe des Arbeitsraumes 51 und damit die Länge des hydropneumatischen Federelementes 45 momentan benötigt wird, beispielsweise zur Waagrechtstellung des Chassis 28 oder zum Ausgleich einer Längenveränderung zwischen den beidseitigen Kugelgelenken 36 des Elementes 45 durch Auslenken des Achskörpers 1. Der Ventilblock 49 erhält deshalb auch Steuersignale vom Umsetzer 25 der direkt gelenkten Achse, wobei wiederum die Übermittlung des Steuersignales auf elektrischem ebenso wie auf mechanischem oder hydraulischem Wege möglich ist.

Da eine hydropneumatische Federung in der Regel mehrere Funktionen erfüllt, wird in der Regel eine elektronische Regelung zum Ansteuern des Ventilblockes 49 über entsprechende Relais verwendet, und damit auch die Übermittlung entsprechender Steuersignale vom Umsetzer zum Ventilblock 49 elektrisch geschehen.

Dadurch verringert sich - insbesondere bei Anhängern und Sattelauflegern - die Anzahl der notwendigen herzustellenden Verbindungen für die gelenkte Hinterachse beim Ankuppeln des Anhängers/Auflegers, da neben einer hydraulischen oder pneumatischen Verbindung lediglich eine in der Regel mehrpolige elektrische Verbindung zwischen den beiden Fahrzeugteilen hergestellt werden muß. Durch den Einsatz derartiger zusätzlicher gelenkter Achsen an einem Fahrzeug kann nicht nur ein leichteres Rangieren des Fahrzeuges erreicht werden, sondern auch die Einsatzfähigkeit des Fahrzeuges bei beengten Verhältnissen, wie sie beispielsweise bei Rettungsfahrzeugen ausschlaggebend ist, stark erhöht werden.

Zusätzlich wird bei LKW's im Hochgeschwindigkeits-Betrieb die Fahrsicherheit erhöht, indem instabile Fahrzustände, wie sie durch Seitenwind und hastige Lenkbewegungen entstehen und zu einem Schlingern des LKW führen können, durch entsprechendes automatisches Gegenlenken der zusätzlich gelenkten Achsen schnell und sicher beseitigt werden.

Vor allem bei der Nachrüstung von bisher ungelenkten Hinterachsen an LKWs mit der erfindungsgemäßen Lenkung stellt sich oft das Problem, daß - wie in der Aufsicht der Fig. 5 am Beispiel einer Doppelachse dargestellt - der Abstand zwischen den Rädern 2 und den weiter innen liegenden Bauteilen im Bereich der Räder zwar für die ursprüngliche, ungelenkte Achse, wie in der linken Bildhälfte dargestellt und mit 71' bezeichnet, ausreicht; werden die Achsen dagegen - wie in der rechten Bildhälfte der Fig. 5 dargestellt - auslenkbar, so nähern sich je nach Einschlagrichtung die vordere bzw. hintere, innen liegende Kante der Räder 2 den weiter innen liegenden Bauteilen soweit an, daß zum Chassis nur noch ein verringerter Abstand 71 gegenüber der ungelenkten Version zur Verfügung steht.

Oft soll nicht auf die platzsparende, jedoch teuer nachzurüstende hydropneumatische Federung übergegangen werden, sondern - wie im Beispiel der Fig. 5 dargestellt - die herkömmliche Federungsart, in diesem Falle Lagerung der Doppelachse mittels eines Blattfeder-Paketes 70', beibehalten werden.

Zu diesem Zweck ist bei der ursprünglichen Bauform in der Regel ein Blattfeder-Paket 70' in Längsrichtung jeweils außerhalb der Längsträger 28a des Chassis' angeordnet und verläuft dachförmig mit seiner Mitte über einem Befestigungsbolzen 80, der sich vom Chassis aus waagrecht in Querrichtung nach außen erstreckt. An diesem Befestigungsbolzen 80 ist das Blattfeder-Paket 70' in bekannter Weise mittels Halteklammern gesichert. Die Enden des Blattfeder-Paketes 70' erstrecken sich in etwa bis über die beiden Achskörper 1', die mit den Enden 73 des Blattfeder-Paketes verbunden und dadurch gegenüber dem Chassis abgefedert sind.

Da der Einleitungspunkt der auf beide Achsen 1' einwirkenden Kräfte in das Chassis der Befestigungsbolzen 80 ist, ist an dieser Stelle der Rahmen verstärkt, indem auf den Innenseiten der beiden Längsträger 28a Verstärkungsplatten 28c vorstehen, zwischen welchen eine massive Stahlbrükke 28b angeordnet ist.

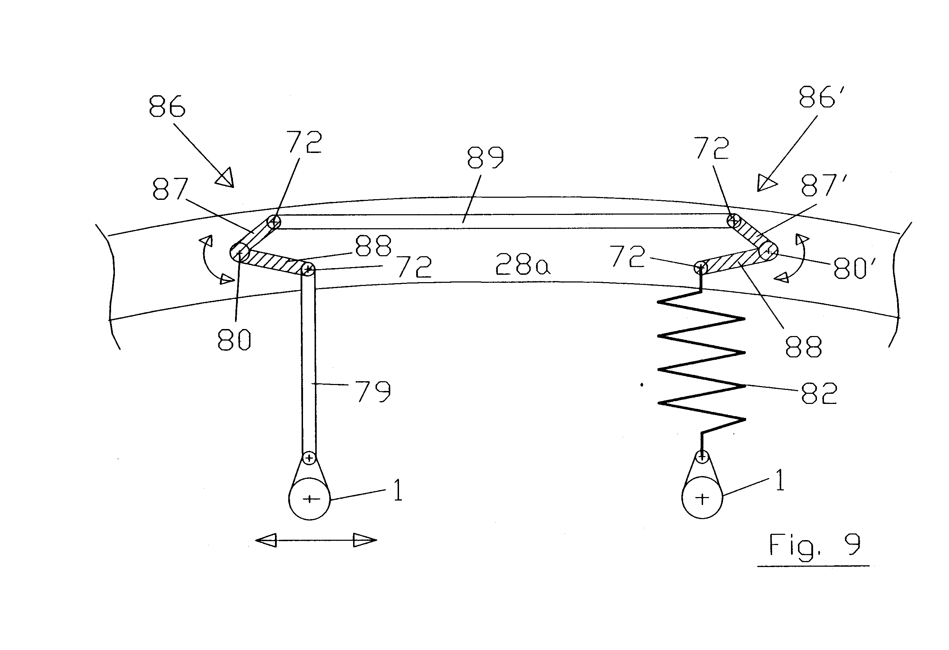

Die Längsträger 28a sind in der Seitenansicht betrachtet, wie etwa in Fig. 9 dargestellt, von diesem Einleitungspunkt in Höhe der Platte 28b aus beidseits etwas nach unten gebogen, aufgrund Eigengewicht und Belastung durch die Ladung.

Wie in der rechten Bildhälfte der Fig. 5 dargestellt, würden bei Lenkbarkeit der Achsen 1 und Einschlag der Räder 2 der Doppelachse diese mit ihren Innenkanten am Blattfeder-Paket schleifen, wenn dabei das ursprüngliche, oder ein gleichbreites Blattfeder-Paket 70' verwendet würde.

Um dies zu vermeiden wird ein in der Aufsicht schmaleres Blattfeder-Paket 70 verwendet, welches dementsprechend auch geringere Kräfte aufnehmen kann als das ursprüngliche Blattfeder-Paket 70'.

Im Falle einer Lenkbarkeit der Achsen 1 gemäß der vorliegenden Erfindung sind jedoch zusätzliche längsverlaufende Elemente, die Streben 29, vorhanden, die im wesentlichen horizontal auf die Achskörper einwirkende Querkräfte aufnehmen.

Dadurch müssen die Federn des Blattfeder- Paketes 70 lediglich die Vertikalkräfte aufnehmen, was mit entsprechend schmalerer Dimensionierung möglich ist, und dadurch auch der angestrebte Lenkeinschlag der Räder 2.

Die Lösung der rechten Bildhälfte der Fig. 5 ist in Fig. 6 in der Seitenansicht, dargestellt in Blickrichtung VI der Fig. 5, aufgezeigt, wobei die Räder 2 nur strichpunktiert eingezeichnet sind.

Wie in Fig. 6 zu erkennen, verläuft das Blattfeder-Paket 70 unterhalb des Befestigungsbolzens 80, der am Längsträger 28a befestigt ist.

Dadurch, daß das Blattfeder-Paket 70 nur von unten nach oben belastet wird, ist eine deutlich schwächere Ausbildung der Befestigungsklammern gegenüber dem Bolzen 80 möglich als bei herkömmlichem, oberhalb des Bolzens gewähltem Verlauf des Blattfeder-Paketes.

Das Blattfeder-Paket 70 ist wannenförmig gebogen, sodaß sich die an den Enden 73 des Blattfeder-Paketes befindlichen Augen oberhalb des Verbindungspunktes zwischen dem Blattfeder-Paket und dem Befestigungsbolzen 80, vorzugsweise oberhalb des Befestigungsbolzens 80, befinden und somit annähernd in oder gar oberhalb der Oberkante der Längsträger 28a.

Die Achskörper 1, deren sichtbare Stirnseiten sich im Falle der lenkbaren Ausführung nach links oder rechts verlagern können, sind nicht direkt mit den Enden 73 verbunden, sondern mittels im wesentlichen senkrecht stehender Hebel 79, die oben an den Enden 73 und unten an den Achskörpern 1 über Gelenke 72 befestigt sind.

Bei einem Auslenken einer Achse 1 verlagern sich diese Hebel 79 aus ihrer senkrechten Lage heraus, wie in der linken Bildhälfte der Fig. 6 strichpunktiert eingezeichnet.

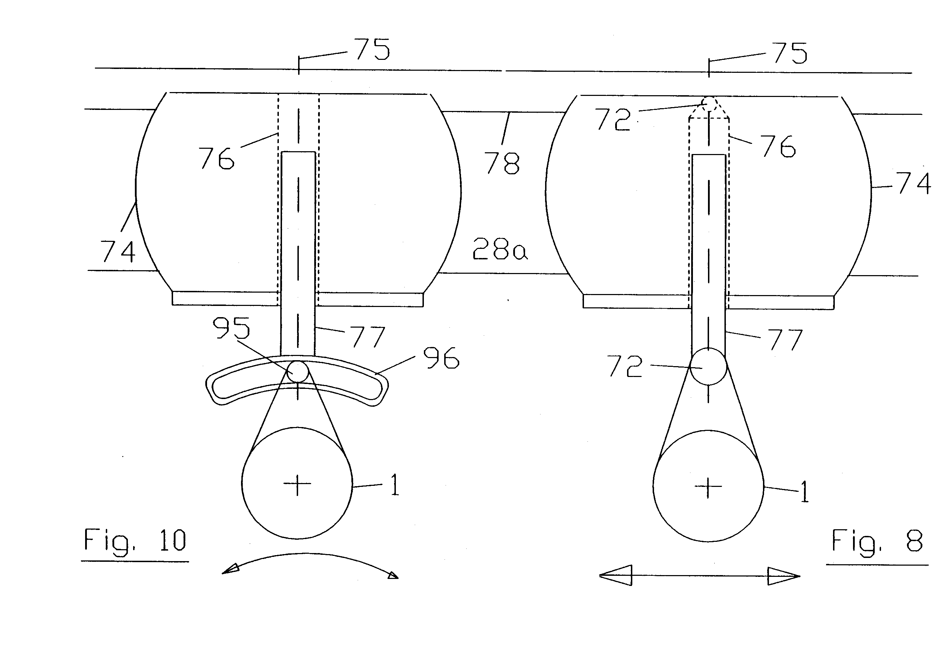

Fig. 7 zeigt - bei gleicher Blickrichtung - gegenüber Fig.6 eine Abwandlung, indem anstelle eines Blattfeder-Paketes 70 ein zweiarmiger Hebel 81 verwendet ist, der gelenkig um den Befestigungsbolzen 80 am Längsträger 28a befestigt ist.

Die Federungsfunktion ist stattdessen in die Distanz zwischen die Enden 73 des Hebels 81 und die Achskörper 1 hineinverlegt. Diese Lösung bietet den Vorteil, daß der Hebel 81 in der Aufsicht noch weniger Breite beansprucht als das Blattfeder-Paket 70 der Fig. 6, und damit in Blickrichtung der Fig. 5 betrachtet ein noch stärkerer Einschlag der Räder 2 möglich wird.

Als Federelemente zwischen den Enden 73 des Hebels 81 und den Achskörpern 1 können entweder Schraubenfedern 82 verwendet werden, wie im linken Bildteil der Fig. 7 dargestellt, oder Gummipakete 83, die aus übereinander gestapelten Massivgummiblöcken 85 und dazwischen gelegten Stahlplatten 84 bestehen.

In jedem Fall müssen die federnden Elemente gelenkig zwischen dem Hebel 81 und dem Achskörper 1 befestigt werden, um einen Versatz der stirnseitigen Enden der Achskörper 1 nach vorne und hinten aufgrund Lenkeinschlag mitmachen zu können, wie in Fig. 7 durch die Doppelpfeile eingezeichnet.

Die Lösung gemaß Fig. 7 ist nur für Doppelachs-Anordnungen möglich, während die Lösung gemäß Fig. 6 auch bei Einzelachsen verwendet werden kann.

Fig. 8 zeigt eine Detaildarstellung zur Lösung der erfindungsgemäßen Lenkung mit einer Luftfederung. Die dabei verwendeten, und an einem fest mit dem Längsträger 28a verbundenen Auflager 78 sich aufstützenden Luftbälge 74 dürfen zur Vermeidung von erhöhtem Verschleiß und Verringerung der Lebensdauer nur entlang ihrer Symmetrieachse 75 belastet werden, was bei nicht-gelenkten Achsen gegeben ist. Um die Auslenkung des Achskör- pers 1 zu ermöglichen, ist parallel, vorzugsweise wie in Fig. 8, entlang der Symmetrieachse im Inneren des Luftbalges 74 eine Führung ausgebildet.

Diese besteht aus einem Führungsrohr 76, welches sich von der freien Stirnseite her möglichst weit in den Balg hinein erstreckt und an seinem Ende über ein Gelenk 72 schwenkbar entweder gegenüber dem gegenüberliegenden Boden des Luftbalges 74 oder direkt gegenüber dem Auflager 78 befestigt ist.

In diesem Führungsrohr 76 ist ein Führungskolben 77 längs verschiebbar geführt, der aus dem Luftbalg 74 nach unten hervorragt und an seinem gegenüberliegenden Ende über ein Gelenk 72 mit dem Achskörper 1 verbunden ist.

Der Führungskolben 77 hat damit die Funktion der senkrechten Hebel 79 bei den anderen Ausführungsformen.

Dadurch ist es möglich, auch bei Auslenkung des Achskör-pers 1 und damit Schrägstellung der Verbindungslinie zwischen den beiden Gelenken 72 der Fig. 8 den Balg 74 soweit mitauszulenken, daß dieser nur entlang seiner Längsrichtung belastet wird.

Fig. 9 zeigt eine von der Hebel-Lösung der Fig. 7 abweichende Lösung, indem die beiden Achsen 1 nicht über einen einzigen, zweiarmigen Hebel 81 miteinander verbunden sind, sondern über ein Hebelgestänge, welches aus zwei in der Regel symmetrisch ausgebildeten Zwischenhebeln 86 und einer diese verbindendes Element 89 besteht.

Die Zwischenhebel 86 sind jeweils wiederum um einen querabstehenden, waagrecht-verlaufenden Befestigungsbolzen 80 herum am Längsträger 28a gelagert und haben in der Regel eine winklige Form. Dabei ragt der sogenannte senkrechte Schenkel 87, 87' nicht vollständig waagrecht, sondern auch mit einer vertikalen Komponente vom Befestigungsbolzen 80 aus nach oben. Die freien Enden dieser Schenkel 87, 87' sind über ein längsstabiles Element 89 gelenkig miteinander verbunden.

An den freien Enden der anderen, im wesentlichen waagrecht verlaufenden Schenkel 88 sind im Abstand darunter wiederum die Achsen 1 mittels im wesentlichen senkrecht verlaufender Elemente, also Hebeln 79 oder federnder Elemente, wie einer Schraubenfeder 82, gelenkig befestigt. Dadurch wird ein Einfedern der einen Achse über das Hebelgestänge auf die andere Achse im Sinne einer Ausfederung übertragen. Aus diesem Grund ist es auch zusätzlich möglich, nur eine der Achsen zu federn, da eine Wirkverbindung zwischen den beiden Achsen gegeben ist.

Ein weiterer Vorteil ist zu erzielen, wenn der Lagerpunkt, der Befestigungsbolzen 80 bzw. 80', der Zwischenhebel 86 in den oberen Bereich des Querschnittes des Längsträgers 28a gelegt wird. In diesem oberen Querschnittsbereich herrscht Zugspannung aufgrund der Durchbiegung des Längsträgers an dieser Stelle, wie vorab beschrieben, vor. Da die längenstabile Verbindung 89 ausschließlich auf Zug belastet ist, drücken die Lagerbolzen 80, 80' im Längsträger 28a in Richtung auf den gegenüberliegenden Befestigungsbolzen 80', 80. Damit wird das Material des Längsträgers 28a zwischen den beiden Bolzen 80, 80' auf Druck belastet und kompensiert dadurch teilweise die in diesem oberen Querschnittsbereich vorhandenen Zugbelastungen mit den positiven Folgen einer höheren Belastbarkeit des Rahmens oder der Möglichkeit, diesen schwächer zu dimensionieren.

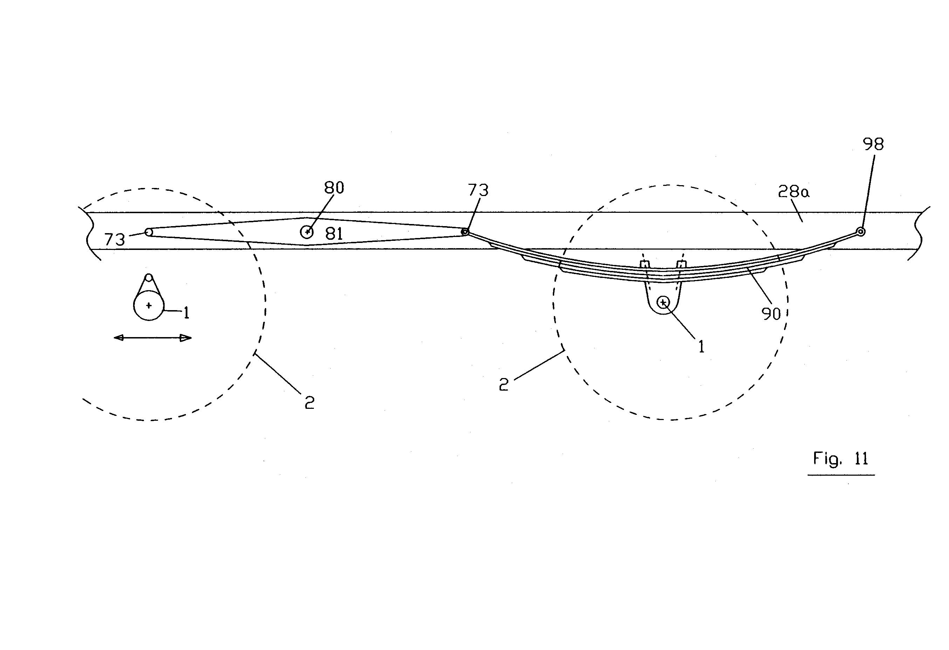

Fig. 11 zeigt ähnlich der Darstellung in Fig. 7 eine Kombinationslösung aus zweiarmigem Hebel 81 und einem Blattfederpaket 90. Dabei ist die Anordnung nicht symmetrisch ausgebildet, sondern an einem Ende des zweiarmigen Hebels 81, in Fig. 11 am linken Ende, ist der Achskörper 1 mit einem senkrechten Hebel 79 oder einer Feder 82 im Abstand unter dem linken Ende 73 auslenkbar befestigt.

Der zweite, in Fig. 11 rechte, Achskörper 1 ist dabei nicht direkt unter dem rechten Ende des zweiarmigen Hebels 81 befestigt, sondern unter einem Blattfederpaket 90, mit dem der rechte Achskörper 1 in herkömmlicher Art und Weise verbunden ist. Dieses Blattfederpaket 90 ist mit seinem rechten Auge 98 in der Fig. 11 an einem chassis-festen Punkt angelenkt, während das linke Auge 99 direkt oder über einen Zwischenhebel mit dem rechten Ende 73 des zweiarmigen Hebels 81 verbunden ist.

Eine derartige Konstruktion ist dann vorteilhaft, wenn die in Fig. 11 rechte Achse 1 nicht lenkbar sein muß, beispielsweise da es sich um eine Triebachse handelt, bei der der Aufwand für eine Lenkbarkeit ohnehin sehr groß ist.

Der Vorteil dieser Konstruktion liegt darin, daß keine Dreieckslenker für die in Fig. 11 rechte, über das Blattfederpaket 90 gefederte Achse 1 notwendig ist. Die Querkräfte werden von dem vom zwei- armigen Hebel 81 abgewandten Auge 98 des Blattfederpaketes 90 aufgenommen und auch vom mittigen Gelenkpunkt des zweiarmigen Hebels 81.

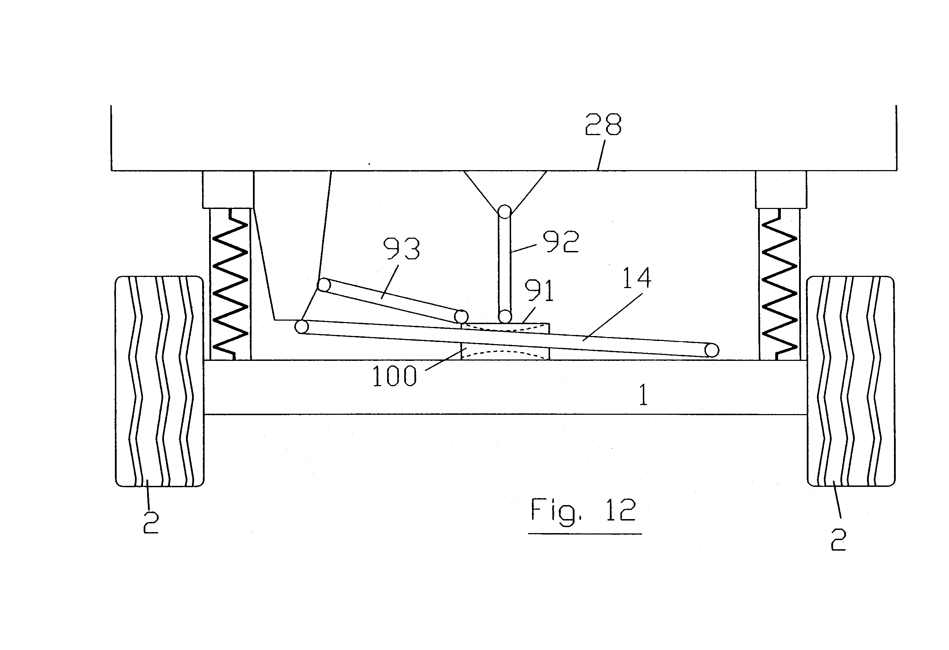

Eine weitere Achskonstruktion, die sowohl bei einfachen als auch bei doppelten Hinterachsen, die lenkbar sein sollen, ohne Dreieckslenker möglich ist, ist in Fig. 12 mit Blick in Fahrtrichtung dargestellt:
Auf dem Achskörper 1 ist mittig ein Tunnelbock 91 befestigt, der über eine Längsstrebe 92 sowie eine Querstrebe 93 sowohl mittig nach vorne als auch zur Seite mit dem Chassis des Fahrzeuges gelenkig verbunden ist. Der Tunnelbock 91 sowie der Achskörper 1 können damit die Auslenk- und Federbewegungen des Achskörpers gegenüber dem Chassis ausgleichen, da ja der Achskörper wie üblich gegenüber dem Chassis gefedert ist.

Die Dreieckslenker werden dadurch überflüssig, daß der Tunnelbock 91 einen symmetrisch ausgebildeten, sich beidseitig erweiternden, trompetenförmigen Durchlaß 100 in Richtung etwa parallel zum Achskörper 1 besitzt, und sich durch diesen Durchlaß 100 ein Parallelkörper 14 zum Achskörper 1 erstreckt. Dieser Parallelkörper 14 ist an möglichst weit auseinander liegenden, beidseits der Mitte des Achskörpers 1 und damit des Tunnelbockes 91 angeordneten Gelenkpunkten einerseits mit dem Achskörper 1 verbunden und andererseits mit dem Chassis 28. Der Befestigungspunkt am Chassis 28 liegt dabei vorzugsweise auf der gleichen Seite und in der Nähe wie der Befestigungspunkt der Querstrebe 93 am Chassis. Die Befestigungspunkte der Längsstrebe 92 und der Querstrebe 93 am Tunnelbock 91 liegen dabei vorzugsweise oberhalb, jedenfalls nicht auf der Höhe der Mitte des Achskörpers.

Eine automatische Rückstellung der ausgelenkten Achskörper 1 kann zusätzlich und unabhängig davon ob es sich um Einzelachsen, Doppelachsen, Doppelachsen mit einer lenkbaren Achse oder Doppelachsen mit zwei lenkbaren Achsen handelt, vorgesehen werden. Eine Lösung ist in der linken Bildhälfte der Fig. 6 dargestellt:
Der auslenkende Hydraulikzylinder 31; dabei ist um die Kolbenstange des Hydraulikzylinders herum in einem Gehäuse 101 eine Feder 100 als Druckfeder angeordnet. Die Feder 100 drückt dabei auf der einen Seite gegen den Hydraulikzylinder und auf der anderen Seite gegen eine Prallplatte 102, die gegen die Innenseite des vom Hydraulikzylinder abgewandten Gehäuseendes drückt, wenn die Kolbenstange weit genug ausgefahren ist, oder gegen einen Anschlag 103 der Kolbenplatte, wenn die Kolbenstange im Zylinder eingefahren ist. In diesem eingefahrenen Zustand drückt bei Ausfall der Hydraulik der Feder 100 die Druckplatte 102 gegen das Ende des Gehäuses, sodaß sich damit der Achskörper 1 in der neutralen Mittellage befindet. Da auf beiden Seiten derartige Federn 100 vorhanden sind, wird der Achskörper 1 automatisch zuverlässig in seine Neutrallage zurückgedrückt.

Eine andere Lösung ist am Beispiel der Luftfederung der Fig. 7 separat in Fig. 10 dargestellt, jedoch auch prinzipiell auf jede andere Federungsart und Achskonstruktion anwendbar:
Das untere Ende der einfedernden, senkrechten Strebe 77 weist eine nach unten offene, konkave Kulisse auf, deren höchster Punkt der neutralen Stellung des Achskörpers 1 entspricht. In der Kulisse 96 läuft ein Kulissenstein in Form einer Rolle 95, die fest mit dem Achskörper 1 verbunden ist. Der ausgelenkte Achskörper 1 wird dabei aufgrund der einwirkenden Normalkräfte immer wieder in den höchsten Punkt der Kulissenführung, also die Neutralstellung des Achskörpers 1 zurückgedrückt.

## Patentansprüche

1. Deaktivierbare, insbesondere nachrüstbare, Achslenkung, insbesondere für Lastkraftwagen, dadurch gekennzeichnet, daß
- an der auszulenkenden Achse wenigstens ein Stellglied einerseits fest mit dem Chassis verbunden ist, und andererseits mit einem den Lenkeinschlag der auszulenkenden Achse bestimmenden Bauteil verbunden ist,
- das Stellglied über ein Steuerglied so verstellt wird, daß das Stellglied proportional zur Verstellung des Steuergliedes ausgefahren wird,
- die Verstellung des Steuergliedes durch den Lenkeinschlag der direkt gelenkten Achse bewegt wird, wobei die Umsetzung zwischen dem Lenkeinschlag der direkt gelenkten Achse und der Bewegung des Steuergliedes variabel ist und auf Null gebracht werden kann, und
- der Achskörper (1) der auszulenkenden Achse gegenüber dem Chassis mittels Luftfederung gefedert ist,
- wobei der Luftbalg (74) ein im wesentlichen in seiner Federungsrichtung verlaufendes Führungsrohr (76) aufweist, in welchem ein Führungskolben (77) verschieblich ist, und
- wobei Führungsrohr (76) und Führungskolben (77) an den gegeneinander abzufedernden Teilen, also dem Chassis (28) einerseits und dem Achskörper (1) andererseits, gelenkig befestigt sind.

2. Achslenkung nach Anspruch 1, dadurch gekennzeichnet, daß die Luftbälge (74) für die Luftfederung auf den Aussenseiten der Längsträger (28a) des Chassis (28) angeordnet sind. (Blattfedern)

3. Deaktivierbare, insbesondere nachrüstbare, Achslenkung, insbesondere für Lastkraftwagen, dadurch gekennzeichnet, daß
- an der auszulenkenden Achse wenigstens ein Stellglied einerseits fest mit dem Chassis verbunden ist, und andererseits mit einem den Lenkeinschlag der auszulenkenden Achse bestimmenden Bauteil verbunden ist,
- das Stellglied über ein Steuerglied so verstellt wird, daß das Stellglied proportional zur Verstellung des Steuergliedes ausgefahren wird,
- die Verstellung des Steuergliedes durch den Lenkeinschlag der direkt gelenkten Achse bewegt wird, wobei die Umsetzung zwischen dem Lenkeinschlag der direkt gelenkten Achse und der Bewegung des Steuergliedes variabel ist und auf Null gebracht werden kann,
- der Achskörper (1) der auszulenkenden Achse mittels Blattfedern gegenüber dem Chassis gefedert ist, und
- wobei der auszulenkende Achskörper (1) gegenüber den entsprechenden Enden (73) des Blattfeder-Paketes (71) indirekt über im wesentlichen senkrecht stehende Hebel (79) verbunden ist, die gegenüber den Enden (73) des Blattfeder-Paketes (71) verschwenkbar sind.

4. Achslenkung nach Anspruch 3 dadurch gekennzeichnet, daß das Federpaket (71) gegenüber der Dimensionierung bei nicht lenkbarer Achse (1') in der Aufsicht schmäler und damit schwächer ausgebildet ist als bei nicht lenkbarer Achse (1).

5. Achslenkung nach Anspruch 3 oder 4, dadurch gekennzeichnet, daß die Blattfedern (70) in der Seitenansicht wannenförmig gebogen unterhalb eines im wesentlichen horizontal vom Chassis abstrebenden Befestigungsbolzens (80) verlaufen, wobei im Ruhezustand die Enden (73) des Blattfeder- Paketes (71) höher als die Verbindungsstelle zwischen Befestigungsbolzen (80) und Blattfeder-Paket (71) liegen. (Zweiarmiger Hebel)

6. Deaktivierbare, insbesondere nachrüstbare, Achslenkung, insbesondere für Lastkraftwagen, dadurch gekennzeichnet, daß
- an der auszulenkenden Achse wenigstens ein Stellglied einerseits fest mit dem Chassis verbunden ist, und andererseits mit einem den Lenkeinschlag der auszulenkenden Achse bestimmenden Bauteil verbunden ist,
- das Stellglied über ein Steuerglied so verstellt wird, daß das Stellglied proportional zur Verstellung des Steuergliedes ausgefahren wird,
- die Verstellung des Steuergliedes durch den Lenkeinschlag der direkt gelenkten Achse bewegt wird, wobei die Umsetzung zwischen dem Lenkeinschlag der direkt gelenkten Achse und der Bewegung des Steuergliedes variabel ist und auf Null gebracht werden kann,
- der Achskörper (1) der auszulenkenden Achse Bestandteil einer Doppelachs-Anordnung ist,
- die beiden Achskörper (1) der Doppelachs-Anordnung an den Enden (73) wenigstens zweier im wesentlichen in Längsrichtung verlaufender, um eine waagrechte, quer verlaufende Achse (80) am Chassis schwenkbarer, zweiarmiger Hebel befestigt sind, und
- zwischen wenigstens einem Ende (73) der zwei-armigen Hebel (81) und dem entsprechenden Achskörper (1) etwa senkrecht wirkende Federelemente angeordnet sind.

7. Achslenkung nach Anspruch 6, dadurch gekennzeichnet, daß am einen Ende (73) der zweiarmigen Hebel (81) als Federelemente Blattfederpakete (90) verwendet werden, deren eines Ende mit dem Chassis und deren anderes Ende mit dem entsprechenden Ende des zweiarmigen Hebels (81) verbunden ist.

8. Achslenkung nach Anspruch 6, dadurch gekennzeichnet, daß es sich bei den federnden Elementen um im wesentlichen senkrecht angeordnete, sogenannte Gummipakete (83), also übereinander gestapelte und miteinander verbundene Massivgummi-Blöcke (85), abwechselnd mit Stahlplatten (84), handelt. (Hebelgestänge)

9. Deaktivierbare, insbesondere nachrüstbare, Achslenkung, insbesondere für Lastkraftwagen, dadurch gekennzeichnet, daß
- an der auszulenkenden Achse wenigstens ein Stellglied einerseits fest mit dem Chassis verbunden ist, und andererseits mit einem den Lenkeinschlag der auszulenkenden Achse bestimmenden Bauteil verbunden ist,
- das Stellglied über ein Steuerglied so verstellt wird, daß das Stellglied proportional zur Verstellung des Steuergliedes ausgefahren wird,
- die Verstellung des Steuergliedes durch den Lenkeinschlag der direkt gelenkten Achse bewegt wird, wobei die Umsetzung zwischen dem Lenkeinschlag der direkt gelenkten Achse und der Bewegung des Steuergliedes variabel ist und auf Null gebracht werden kann,
- der Achskörper (1) der auszulenkenden Achse Bestandteil einer Doppelachs-Anordnung ist,
- jedem der Achskörper (1) der Doppelachse wenigstens ein zwei-armiger, gegenüber dem Chassis (28a) um eine im wesentlichen waagrechte, quer verlaufende Achse (80, 80') schwenkbarer Zwischenhebel (86, 86') zugeordnet ist,
- jeder Zwischenhebel (86, 86') einen im wesentlichen senkrecht verlaufenden Hebelarm (87, 87') aufweist, deren freie Enden über ein längenstabiles Element (89) gelenkig miteinander verbunden sind und
- jeder Zwischenhebel (86, 86') einen im wesentlichen waagrecht verlaufenden Schenkel (88, 88') aufweist, an dessen freiem Ende über im wesentlichen senkrecht stehende Zwischenelemente die jeweiligen Achskörper (1) gelenkig befestigt sind, wobei
- wenigstens eines der Zwischenelemente ein federndes Element ist.

10. Achslenkung nach Anspruch 9, dadurch gekennzeichnet, daß der Befestigungspunkt (80, 80') der Zwischenhebel (86, 86') am Chassis (28) in der oberen Hälfte des Querschnittes der Längsträger (28a) des Rahmens liegt.

11. Deaktivierbare, insbesondere nachrüstbare, Achslenkung, insbesondere für Lastkraftwagen, dadurch gekennzeichnet, daß
- etwa mittig am Achskörper (1) ein Tunnelbock (91) angeordnet ist,
- der Tunnelbock (91) über eine Längsstrebe (92) mit dem Chassis gelenkig verbunden ist,
- der Tunnelbock (91) über eine im wesentlichen parallel zum Achskörper (1) verlaufende Querstrebe (92) gelenkig mit dem Chassis verbunden ist,
- ein Parallelkörper (94), der sich durch den als Kugelgelenk mit begrenztem Ausschlag wirkenden Tunnelbock (91) hindurch erstreckt, einerseits am Chassis in der Nähe des Befestigungspunktes der Querstrebe (93) und andererseits am Achskörper (1) auf der gegenüberliegenden Seite an einem möglichst weit entfernten Punkt befestigt ist, und
- der Achskörper (1) gegenüber dem Chassis gefedert ist.

12. Achslenkung nach einem der vorhergehenden Ansprüche, dadurch gekennzeichnet, daß die Arbeitsgeschwindigkeit des Umsetzers (25) in den beiden Arbeitsrichtungen unjabhängig voneinander einstellbar ist.

13. Achslenkung nach Anspruch 26 wobei die Achse eine Drehschemellenkung ohne Drehkranz aufweist und die den Lenkeinschlag der Achse bewirkenden Hydraulikzylinder (6) auf gegenüberliegende Seiten der Drehachse (27) des Achskörpers (1) etwa in Längsrichtung zwischen Achskörper (1) und Chassis (28) angeordnet sind, dadurch gekennzeichnet, daß
- der Achskörper (1) in Fahrzeugmitte einen Hebelarm (34) aufweist, dessen freies Ende in Fahrzeugmitte im Abstand zur Drehachse (27) des Achskörpers (1) liegt und über ein Kugelgelenk (36) Anlenkpunkt für zwei schräg von der Fahrzeugmittelachse abstrebende Streben des Dreieckslenkers (29) ist, die mit ihrem anderen Ende über Kugelgelenke (36) mit dem Chassis (28) des Fahrzeugs verbunden sind und
- beidseits der Drehachse (27) je wenigstens ein hydropneumatisches Federelement (43) im wesentlichen senkrecht zwischen dem Achskörper (1) und dem Chassis (28) mittels Kugelgelenken (36) angeordnet sind.

14. Achslenkung nach Anspruch 13, dadurch gekennzeichnet, daß auf jeder Seite der Drehachse (27) je zwei hydropneumatische Federelemente (43) an längsgerichteten, nach vorne und hinten gerichteten Auslegern (44) des Achskörpers (1) angreifen.

15. Achslenkung nach einem der Ansprüche 14 bis 13, dadurch gekennzeichnet, daß auf der dem Hebelarm (34) gegenüberliegenden Seite ein Hebel am (35) angeordnet ist, dessen freies Ende in Fahrzeugmitte gegenüber der Drehachse (27) um den Nachlauf (33) versetzt ist, wobei zwischen dem freien Ende des Hebels (35) und einem festen Punkt am Chassis in Fahrzeugmitte über Kugelgelenke eine Strebe (30) angeordnet ist.

16. Achslenkung nach einem der vorhergehenden Ansprüche, dadurch gekennzeichnet, daß zur selbsttätigen Rückführung der auslenkbaren Achse in die neutrale Lage die Verbindung zwischen dem senkrecht stehenden Hebel (79) bzw. den senkrecht wirkenden Federelementen und den Achskörpern (1) als Kulissenführung ausgebildet ist, in der die Kulisse etwa pfannenförmig mit dem tiefsten Punkt der Neutrallage ausgebildet ist, und der Kulissenstein mit dem Chassis bzw. dem Ende (73) des zweiarmigen Hebels (81) bzw. dem Ende des Blattfederpaketes (71) dem Achskörper verbunden ist.

17. Achslenkung nach Anspruch 16 dadurch gekennzeichnet, daß als Kulisse eine Pfanne mit dem tieftsen Punkt in der Neutralstellung des Achskörpers (1) verwendet wird, und als Kulissenstein eine mit dem Achskörper (1) verbundene Rolle, die auf der Oberseite der Pfanne hin- und herrollen kann.
